Europäisches Patentamt

European Patent Office

Office européen des brevets

(19)

(11) EP 0 729 493 B1

(12) **EUROPEAN PATENT SPECIFICATION**

(45) Date of publication and mention
of the grant of the patent:
**03.06.1998 Bulletin 1998/23**

(51) Int Cl.[6]: **C08F 259/04**, C08F 263/02,
C08F 285/00, C08F 255/02,
C09D 151/00

(21) Application number: **95900690.9**

(22) Date of filing: **09.11.1994**

(86) International application number:
**PCT/EP94/03703**

(87) International publication number:
**WO 95/14063 (26.05.1995 Gazette 1995/22)**

(54) **AQUEOUS DISPERSION OF VINYL POLYMERS**

WÄSSRIGE DISPERSION AUS VINYLPOLYMEREN

DISPERSION AQUEUSE DE POLYMERES DE VINYLE

(84) Designated Contracting States:
**AT BE CH DE DK ES FR GB GR IE IT LI LU MC NL
PT SE**

(30) Priority: **19.11.1993 EP 93203252**

(43) Date of publication of application:
**04.09.1996 Bulletin 1996/36**

(73) Proprietor: **Akzo Nobel N.V.
6824 BM Arnhem (NL)**

(72) Inventors:
• **BUTER, Roelof
NL-6952 HT Dieren (NL)**
• **VAN STREUN, Karel, Hindrik
NL-6835 CT Arnhem (NL)**

• **IEDEMA, Jan
NL-6931 VG Westervoort (NL)**

(74) Representative: **Schalkwijk, Pieter Cornelis
AKZO NOBEL N.V.
Patent Department (Dept. APTA)
P.O. Box 9300
6800 SB Arnhem (NL)**

(56) References cited:
DE-A- 1 165 860          GB-A- 1 193 285
GB-A- 1 253 999          US-A- 3 639 326

Remarks:
The file contains technical information submitted
after the application was filed and not included in this
specification

## Description

The invention relates to an aqueous dispersion of vinyl polymers, to a process for preparing such dispersions and to coating compositions based on such polymer dispersions. Dispersions of vinyl polymers are frequently used in coating compositions for wall paints. A problem of said paints is that they detract from the performance as far as the water-resistance is concerned.

The present invention now provides an aqueous coating composition which may be used as wall paint, where a good water-resistance as well as a high gloss may be obtained.

The aqueous dispersion of vinyl polymers is characterized in that the particles comprise

(a) a core obtained by emulsion polymerization of ethylene and a vinyl monomer selected from the group consisting of

(1) vinyl chloride, and

(2) a vinyl ester of a $C_{1-13}$ alkanoic acid, a free-radically polymerizable monomer containing at least two double bonds, and optionally vinyl chloride, and

(b) a shell obtained by copolymerization in a subsequent step of

(1) 30 to 90 wt.% of a (cyclo)alkyl ester of (meth)acrylic acid containing 4 to 12 carbon atoms in the alkyl group,

(2) 10 to 70 wt.% of a monoethylenically unsaturated monomer selected from the group consisting of an alkyl ester of (meth)acrylic acid containing 1 to 3 carbon atoms in the alkyl group, styrene, (α)methylstyrene and mixtures thereof, and

(3) 0 to 20 wt.% of a different copolymerizable, monoethylenically unsaturated monomer.

In GB-A-1 193 285 (D1) a latex is claimed of a <u>graft copolymer</u> of 15 to 100 parts by weight of an alkyl or cycloalkyl methacrylate incorporated into 100 parts by weight of an ethylene/vinyl chloride copolymer.

Best results are obtained with an aqueous dispersion wherein the weight ratio of the core:shell copolymers is between 20:80 and 90:10, preferably between 40:60 and 80:20.

As examples of vinylesters of a $C_{1-13}$ alkanoic acid suitable for preparing the core polymer may be mentioned: vinyl formiate, vinyl acetate, vinyl laurate, vinyl propionate, and vinyl octoate.

As nonlimiting examples of "free-radically polymerizable monomer containing at least two bonds" which are useful in the practice of the current invention may be mentioned glycerol diallylether, triallyl cyanurate, triallyl isocyanurate, allyl methacrylate, butanediol diacrylate, trimethylolpropane triacrylate, and preferably, trimethylolpropane diallylether. This is a nonlimiting list because the range of free-radically polymerizable monomers is too broad to include a complete listing, and further, such reactions and potential reactants are well-known in the art and need not be repeated here.

As examples of (cyclo)alkyl (meth)acrylates suitable for preparing the shell monomer and having a (cyclo)alkyl group with 4-12 carbon atoms may be mentioned: butyl acrylate, butyl methacrylate, 2-ethylhexyl acrylate, 2-ethylhexyl methacrylate, octyl acrylate, octyl methacrylate, isobornyl acrylate, isobornyl methacrylate, dodecyl acrylate, dodecyl methacrylate, cyclohexyl acrylate, and cyclohexyl methacrylate.

As examples of alkyl esters of (meth)acrylic acid containing 1 to 3 carbon atoms in the alkyl group may be mentioned: methyl acrylate, ethyl methacrylate, propyl acrylate and isopropyl methacrylate.

As suitable monomeric, monoethylenically unsaturated compounds of which maximally 20 wt.% may be used in the monomer mixture for the shell polymer may be mentioned: alkyl maleates and fumarates having 1 to 12 carbon atoms in the (cyclo)alkyl groups, such as dimethyl maleate, diethyl maleate, diethyl fumarate, and dipropyl maleate; (meth)acrylates having ether groups such as 2-methoxyethyl methacrylate, 2-ethoxyethyl methacrylate, 3-methoxypropyl acrylate; hydroxyalkyl (meth)acrylates, e.g., 2-hydroxyethyl acrylate, 2-hydroxyethyl methacrylate, 2-hydroxypropyl acrylate, 2-hydroxypropyl methacrylate, 4-hydroxybutyl acrylate, 6-hydroxyhexyl acrylate, p-hydroxycyclohexyl acrylate, p-hydroxycyclohexyl methacrylate, hydroxypolyethylene glycol (meth)acrylates, hydroxypolypropylene glycol (meth)acrylates and the corresponding alkoxy derivatives thereof; epoxy(meth)acrylates, such as glycidyl acrylate, glycidyl methacrylate; monovinyl aromatic hydrocarbons, such as vinyl toluene, vinyl naphthalene; also acrylamide and methacrylamide, acrylonitrile, methacrylonitrile, N-methylol acrylamide, N-methylol methacrylamide; N-alkyl (meth)acrylamides, such as N-isopropyl acrylacide, N-isopropyl methacrylamide, N-t-butyl acrylamide, N-t-octyl acrylamide, N,N-dimethyl aminoethyl methacrylate, N,N-diethyl aminoethyl methacrylate; (meth)acrylic acid, maleic acid, itaconic acid; monomers, such as vinyl chloride, vinyl acetate, vinyl propionate, and monomers containing one or more urea or urethane groups, such as for instance the reaction product of 1 mole of isocyanatoethyl methacrylate and 1 mole of butylamine, 1 mole of benzylamine, 1 mole of butanol, 1 mole of 2-ethylhexanol, and 1 mole of methanol, respectively. Mixtures of these compounds may also be used.

A particularly suitable aqueous dispersion according to the invention may be obtained when, based on core weight, said core is obtained by emulsion polymerization of

(1) 2 to 30 wt.% of ethylene,

(2) 0 to 10 wt.% of free-radically polymerizable monomer containing at least two double bonds,

(3) 0 to 80 wt.% of monomer(s) of vinyl ester of a $C_1$ to $C_{13}$ alkanoic acid, and

(4) 0 to 95 wt.% of vinyl chloride monomer.

The aqueous dispersions of a multi-layer polymer having core/shell form according to the current invention may be prepared by a process comprised of

(a) emulsion polymerizing, to form a core, a core monomer mixture comprising ethylene and a vinyl monomer selected from the group consisting of

(1) vinyl chloride, and

(2) a vinyl ester of a $C_{1-13}$ alkanoic acid, a free-radically polymerizable monomer containing at least two double bonds, and optionally vinyl chloride,

(b) followed by copolymerization in a subsequent step, to form a shell, a shell monomer mixture comprising

(1) 30 to 90 wt.% of a (cyclo)alkyl ester of (meth)acrylic acid containing 4 to 12 carbon atoms in the alkyl group,

(2) 10 to 70 wt.% of a monoethylenically unsaturated monomer selected from the group consisting of an alkyl ester of (meth)acrylic acid containing 1 to 3 carbon atoms in the alkyl group, styrene, ($\alpha$)methylstyrene and mixtures thereof, and

(3) 0 to 20 wt.% of a different copolymerizable, monoethylenically unsaturated monomer.

The emulsion polymerization described in step (a) above may also be carried out in the presence of vinyl and/or acrylic seed latex. Preferably, such seed latices are typically composed of (meth)acrylic esters of $C_{1-4}$ alkyl groups. The use of seed latex in emulsion polymerisation is known from, for example, EP-A-0 287 144. The amount of seed latex typically used is in the range of 0,01 to 10 wt.% of the final multi-layer polymer. The typical particle size of the seed latex is in the range of 10 to 100 nm.

The emulsifiers of which use is preferably made in the emulsion polymerization are of an anionic or nonionic nature. Examples of anionic emulsifiers include: potassium laurate, potassium stearate, potassium oleate, sodium decyl sulphate, sodium dodecyl sulphate, and sodium rosinate. Examples of non-ionic emulsifiers include: linear and branched alkyl and alkylaryl polyethylene glycol, and polypropylene glycol ethers and thioethers, alkyl phenoxypoly(ethyleneoxy) ethanols such as the adduct of 1 mole of nonyl phenol to 5-12 moles of ethylene oxide, or the ammonium salt of the sulphate of this adduct. Also, in emulsion polymerization, the conventional radical initiators may be used in the usual amounts. Examples of suitable radical initiators include: ammonium persulphate, sodium persulphate, potassium persulphate, bis(2-ethylhexyl) peroxydicarbonate, di-n-butyl peroxydicarbonate, t-butyl perpivalate, t-butyl hydroperoxide, cumene hydroperoxide, dibenzoyl peroxide, dilauroyl peroxide, 2,2'-azobisisobutyronitrile, and 2,2'-azobis-2-methylbutyronitrile. As suitable reducing agents which may be used in combination with e.g. a hydroperoxide may be mentioned: ascorbic acid, sodium sulphoxylate formaldehyde, thiosulphates, bisulphates, hydrosulphates, water-soluble amines such as diethylene triamine, triethylene tetraamine, tetraethylene pentamine, N,N'-dimethyl ethanolamine, N,N-diethyl ethanolamine, and reducing salts such as cobalt, iron, nickel, and copper sulphate. Optionally, a chain length regulator, for instance n-octyl mercaptan, dodecyl mercaptan, and 3-mercaptopropionic acid, may also be used.

Copolymerization of the monomer mixtures generally is carried out at elevated pressure and at a temperature of 40°-100°C or higher.

The aqueous dispersions of the instant invention are particularly useful in coating compositions which produce coatings having a surprisingly good water-resistance as well as a high gloss.

The water-dispersible dispersions according to the invention may be used as such or in combination with such water-dispersible materials as alkyd resins, polyesters, polyvinyl resins or polyurethanes. They are extremely suitable for use in wall paints and paints for wood. To this end the aqueous dispersions according to the invention are used in combination with the conventional additives and adjuvants, such as, for nonlimiting example, pigments, dispersing agents, dyes, and organic solvents. The applicable pigments may have an acid, a neutral or a basic character. Optionally, the pigments may be pre-treated to modify the properties. Nonlimiting examples of suitable pigments are the inorganic pigments, such as titanium dioxide, iron oxide, carbon black, silica, kaolin, talc, barium sulphate, lead silicate, strontium chromate, and chromium oxide; and organic pigments, such as phthalocyanine pigments.

The invention will be further described in the following examples and comparative examples, which must not be construed as limiting the scope of the present invention.

Examples

In the following examples, the mean particle size of the dispersions was determined by dynamic light scattering, the dispersion being diluted with water to a solids content of about 0.1 wt.%.

The solids content was determined in accordance with ASTM method 0 1644-59 with heating at 140°C over a period of 30 minutes.

As a representative example of the conventional and suitable emulsifiers there was used in all examples a 30 wt. % aqueous solution of the ammonium sulphate of the adduct of 1 molecule of nonyl phenol to 9 molecules of ethylene oxide.

The gloss was determined in accordance with ASTM D-523 at 20°. A gloss value on a sheet of glass of above 60 at 20° is considered high, while a gloss value of above 65 at 20° is considered very high.

The water resistance was determined by first applying a 150 μm coating layer onto a glass plate, followed by drying for 24 hrs at 23°C. After spotting with a drop of water, the coating layers were inspected visually after 1 week for the presence of bubbles and blisters. The test is rated on a 1-10 scale, where "1" is very poor and "10" is excellent.

In the Examples, use is made of the following abbreviations and product names:

Fenopon EP-110: ammonium salt of sulphated nonylphenoxypolyethylene oxide
Trigonox AW-70: tert.butyl hydroperoxide
SFS: sodium formaldehyde sulphoxylate
DAAA: diacetone acrylamide
2-EHA: 2-ethylhexyl acrylate
STY: styrene
MMA: methyl methacrylate
MAA: methacrylic acid
WAM: Nourycryl MA-125 is a wet adhesion monomer or promotor (WAM or WAP)
BMA: butyl methacrylate
VAc: vinyl acetate
TMPDAE: trimethylol propane diallyl ether
TAC: triallyl cyanurate
Veova 9/10: hydrophobic vinyl esters (ex Shell)
VB: solids content
VC: vinyl chloride

Example 1

A. The preparation of a seed emulsion

Into a 3 1 three-necked flask fitted with a stirrer, a cooling apparatus, a dosing funnel with a pressure equalisation tube, a temperature control, and an $N_2$/vacuum flushing mechanism were charged successively:

| Fenopon EP-110 | 33.33 g |
| demineralised water | 1984.0 g |
| MMA | 55.0 g |
| BA | 45.0 g |
| ascorbic acid | 0.4 g |
| $FeSO_4.7H_2O$ | 1.0 mg |

The dosing funnel was filled with a solution of 0.5 g of ammonium persulphate in 100 g of water.

The whole of the reactor was evacuated three times and then filled with $N_2$ again.

The temperature of the contents of the reactor was raised to 60°C, after which 75 ml of ammonium persulphate solution were added in one go.

The reactor temperature increased to 65°C within about 5 minutes, whereupon the remaining ammonium persulphate solution was post-fed in 30 minutes.

Next, the flask was cooled down to room temperature.

The seed dispersion was a stable emulsion with a solids content of 5.0 wt.% and a particle size of 32 nm.

B. The preparation of the core dispersion

The preparation of the core dispersion was carried out in a 600 ml pressure reactor fitted with a stirrer, an electric heating jacket with temperature control, a stirrer with variable speed, a pressure gauge, and a bursting disc. The reactor could be connected to thre metering streams and flushed with an inert gas.

Introduced into the reactor vessel were:

| | |
|---|---|
| seed emulsion (1A) | 136.1 g |
| demineralised water | 30.0 g |
| $FeSO_4.7H_2O$ | 1.0 mg |

The reactor was flushed with nitrogen and its temperature brought to 60°C. Next, using ethylene, the pressure in the reactor was raised to 35 bar. There was no further ethylene feeding during the reaction.

The following were added simultaneously:

- 39.4 g of VC, feeding time 3 hours and 15 minutes
- a pre-emulsion, feeding time 3 hours and 30 minutes, the pre-emulsion being composed of:

| | |
|---|---|
| Fenopon EP-110 | 1.68 g |
| VAc | 78.7 g |
| Trigonox AW-70 | 0.21 g |
| demineralised water | 29.0 g |

- a reducing solution, feeding time 5 hours:

| | |
|---|---|
| SFS | 0.275 g |
| $NH_4OH$ (2N) | 2.75 g |
| demineralised water | 27.25 g |

After the feeding of the pre-emulsion over 3 hours and 30 minutes an oxidation solution was added simultaneously with the reducing solution over a period of 90 minutes.

The oxidation solution was composed of:

| | |
|---|---|
| Trigonox AW-70 | 0.125 g |
| demineralised water | 9.0 g |

The feeding processes were interrupted after 4 hours and 15 minutes. At this time the ethylene pressure was eased down. When the reactor had become pressureless, the feeding of the oxidation and reducing solutions was started up again.

After 5 hours total the reactor was cooled down.

The core dispersion prepared in this manner was a stable emulsion with a solids content of 37.1 wt.% and a particle size of 93 nm. The conversion of the various monomers could be calculated from an analysis of the polymer elements:

%C = 52.14; %H = 6.91; %0 = 23.76; %Cl = 16.58.

The VC conversion was 99%, the VAc conversion was 99.6%, and the ethylene uptake was 6.6 g.

C. The preparation of the core-shell dispersion

325.3 g of core dispersion having a VB=37.1% were added beforehand to a 1 l reactor and rendered thoroughly oxygen-free by forming a vacuum, flushing with nitrogen, and then repeating this procedure twice more. The dispersion was next heated to 60°C, whereupon 180.0 g of pre-emulsion (see pre-emulsion preparation below) were added simultaneously with 22.5 g of reducing solution. On conclusion of the pre-emulsion feeding after 1.5 hours, the reducing solution was added for 15 more minutes. The obtained dispersion was then kept at 60°C for a further 0.5 hours and subsequently cooled to 40°C. At this temperature 3.6 g of 25% ammonia were added, whereupon the dispersion was cooled to room temperature and diluted with 19.6 g of water to VB≈45%. The dispersion had a pH≈8,5 and a particle size of 118 nm. The core/shell ratio was 50/50. The shell was composed of 36.7% of 2-EHA, 25.0% of STY, 28.8% of MMA, 3.5% of MAA, 3.0% of DAAA, and 3.0% of WAM. Tg(shell, calculated)≈30°C.

A pre-emulsion was prepared which was composed of:

| | |
|---|---|
| demineralised water | 129.0 g |
| Fenopon EP-110 | 6.48 g |
| Trigonox AW-70 | 0.78 g |
| monomer mixture | 277.4 g |

The monomer mixture was composed of:

| | |
|---|---|
| DAAA | 9.0 g |
| 2-EHA | 110.2 g |
| STY | 75.0 g |
| MMA | 86.4 g |
| MAA | 10.5 g |
| WAM | 9.0 g |

To prepare the pre-emulsion Fenopon was added to the demineralised water, as was Trigonox AW-70. To this whole the monomer mixture was added in about 30 minutes, with vigorous stirring and under nitrogen.

The reducing solution was prepared by dissolving 1.03 g of SFS in demineralised water to a concentration of weight of 1.03%.

Alternative synthesis options:

* use may be made of other surfactants: sodium lauryl sulphate, sodium dodecyl benzene sulphate, etc.
* also, it is possible to alter the initiation system: persulphate (ammonium, sodium, potassium) instead of Trigonox AW-70, ascorbic acid, metahydrogen sulphite, etc. instead of SFS. Also, a thermal initiation system may be used: persulphate, azo-initiators, etc., though often elevated temperatures (70°-80°C) are required. This temperature range may be employed for the present system.
* alternatively, the pre-emulsion may be omitted. In that case, the soap is dissolved in, say, the reducing solution, and the Trigonox is added separately.

Example 2

Example 1 was repeated, except that the following changes were made in Example 1B: 77.4 g of VAc and 1.31 g of TMPDAE were added via the pre-emulsion (1 wt.% of crosslinker calculated on the monomers).
The core dispersion prepared in this way was a stable emulsion having a solids content of 37.0 wt.% and a particle size of 88 nm.
The conversion of the monomers could be calculated from an analysis of the polymer elements:
%C = 52.385; %H = 6.94; %0 = 24.01; %Cl = 16.7.
The VAc conversion was 99.2%, the VC conversion was 99.3%, and the ethylene uptake was 6.44 g.

Example 3

Example 1 was repeated, except that the following changes were made in Example 1B: 78.05 g of VAc and 0.65 g of TMPDAE were added via the pre-emulsion (0.5 wt.% of crosslinker calculated on the monomers).
The core dispersion prepared in this way was a stable emulsion having a solids content of 37.05 wt.% and a particle size of 97 nm.
The conversion of the monomers could be calculated from an analysis of the polymer elements:
%C = 52.27; %H = 6.83; %0 = 24.18; %Cl = 16.7.
The VAc and VC conversions both were 99.0%. The ethylene uptake was 6.3 g.

Example 4

Example 1 was repeated, except that the following changes were made in Example 1B: 76.8 g of VAc and 1.96 g of TMPDAE were added via the pre-emulsion (1.5 wt.% of crosslinker calculated on the monomers).
The core dispersion prepared in this way was a stable emulsion having a solids content of 36.3 wt.% and a particle size of 97 nm.
The conversion of the monomers could be calculated from an analysis of the polymer elements:
%C = 52.2; %H = 7.035; %0 = 23.8; %Cl = 17.1.
The VC conversion was 99.6%, the VAc conversion was 97.2%, and the ethylene uptake was 6.5 g.

Example 5

Example 1 was repeated, except that the following changes were made in Example 1B: 77.6 g of VAc and 0.85 g of TAC were added via the preemulsion (the crosslinking corresponding to 1.31 g of TMPDAE).
The core dispersion prepared in this way was a stable emulsion having a solids content of 37.1 wt.% and a particle size of 90 nm.
The conversion of the monomers could be calculated from an analysis of the polymer elements:
%C = 52.04; %H = 6.84; %0 = 23.82; %Cl = 16.58.
The VC conversion was 99.0%, the VAc conversion was 99.6%, and the ethylene uptake was 6.6 g.

Example 6

Example 1 was repeated, except that the following changes were made in Example 1B:

- 58.4 g of VAc and 1.31 g of TMPDAE were added via the pre-emulsion
- 58.4 g of VC were added
- the ethylene pressure was 55 bar.

The core dispersion prepared in this way was a stable emulsion having a solids content of 37.45 wt.% and a particle size of 91 nm.
The conversion of the monomers could be calculated from an analysis of the polymer elements:
%C = 51.27; %H = 6.73; %0 = 17.0; %Cl = 24.14.
The VC conversion was 99.2%, the VAc conversion was 92.1%, and the ethylene uptake was 13.6 g.

Example 7

Example 1 was repeated, except that the following changes were made in Example 1B:

- 39.4 g of VAc and 1.31 g of TMPDAE were added via the pre-emulsion
- 77.4 g of VC were added
- the ethylene pressure was 55 bar.

The core dispersion prepared in this way was a stable emulsion having a solids content of 37.25 wt.% and a particle size of 88 nm.
The conversion of the monomers could be calculated from an analysis of the polymer elements:
%C = 48.90; %H = 6.67; %0 = 12.33; %Cl = 31.50.
The VC conversion was 96.4%, the VAc conversion was 91.6%, and the ethylene uptake was 12.8 g.

Example 8

Example 1 was repeated, except that the following changes were made in Example 1B:

- 118.1 g of VC were added

- there was no VAc addition via the pre-emulsion
- the ethylene pressure was 55 bar.

The core dispersion prepared in this way was a stable emulsion having a solids content of 38.1 wt.% and a particle size of 91 nm.
The VC conversion could be calculated from an analysis of the polymer elements:
%C = 44.71; %H = 6.30; %0 = 2.57; %Cl = 46.14.
The VC conversion was 93.5%. The ethylene uptake was 12.8 g.

Example 9

Example 1 was repeated, except that the following changes were made in Example 1B:

- the pre-emulsion contained the following monomers:

| VAc | 38.7 g |
|---|---|
| TMPDAE | 1.31 g |
| Veova 9 | 22.15 g |
| Veova 10 | 13.55 g. |

The core dispersion prepared in this way was a stable emulsion having a solids content of 36.4 wt.% and a particle size of 93 nm.
Only the chlorine content of the polymer was determined. It was 16.61%.

Example 10

Example 4 was repeated, except that the following change was made in Example 1C:

- the calculated Tg of the shell was set at ≈39°C by replacing part of the 2-EHA with BMA. The shell composition was as follows: 28.1% of 2-EHA, 8.6% of BMA, 25.0% of STY, 28.8% of MMA, 3.5% of MAA, 3.0% of DAAA, and 3.0% of WAM.

Example 11

Example 4 was repeated, except that the following change was made in Example 1C:

- the calculated Tg of the shell was set at =46°C by replacing part of the 2-EHA with BMA. The shell composition was as follows: 21.4% of 2-EHA, 15.3% of BMA, 25.0% of STY, 28.8% of MMA, 3.5% of MAA, 3.0% of DAAA, and 3.0% of WAM.

| Paint Formulation | |
|---|---|
| demineralised water | 34.3 g |
| propylene glycol | 29.4 g |
| Orotan SG1 | 2.1 g (dispersant) |
| ammonia (25%) | 2.0 g |
| Proxel XL 2 | 0.5 g |
| TiO$_2$ RHD2 | 196.3 g |
| Nopco 8034 E | 1.0 g (antifoaming agent) |
| | |
| core-shell dispersion (VB45%) | 544.0 g |
| Berol 09 (25%) | 21.6 g (non-ionic surfactant) |
| demineralised water | 70.8 g |
| Nopco 8034 E | 2.0 g |

(continued)

| Paint Formulation | |
|---|---|
| Texanol | 32.0 g (coalescent) |
| Primal RM05        (up to ICI = 2) | (thickener) |
| ammonia (25%) | 4.0 g |
| demineralised water | balance |
| in all | 1000.0 g |

| Example | Core Compisition[1] VAc/VC/ET | Cross-linker | MFT (°C) | Gloss 20° | Water Resistance |
|---|---|---|---|---|---|
| 1 | 59/30/5 | - | 25 | 68 | 4 |
| 2 | 58/29/5 | 1% TMPDAE | 27 | 63 | 6 |
| 3 | 58/29/5 | 0.5% TMPDAE | 22 | 57 | 7 |
| 4 | 75/29/5 | 1.5% TMPDAE | 27 | 63 | 7 |
| 5 | 58/29/5 | 0.65% TAC | 24 | 58 | 6 |
| 6 | 39/42/10 | 1% TMPDAE | 25 | - | - |
| 7 | 27/55/10 | 1% TMPDAE | 25 | - | - |
| 8 | 0/81/11 | - | 29 | 70 | 6 |
| 9 | 29% VC | 1% TMPDAE | 25 | 66 | 6 |
| 10[2] | 75/29/5 | 1.5% TMPDAE | 31 | 62 | 7 |
| 11[3] | 75/29/5 | 1.5% TMPDAE | >35 | 57 | 7 |

[1] shell composition: 36.7% of 2-EHA, 25.0% of STY, 28.8% of MMA, 3.5% of MAA, 3.0% of DAAA, and 3.0% of WAM. Tg(shell, calculated)≈30°C.

[2] shell composition: 28.1% of 2-EHA, 8.6% of BMA, 25.0% of STY, 28.8% of MMA, 3.5% of MAA, 3.0% of DAAA, and 3.0% of WAM. Tg(shell, calculated)≈39°C.

[3] shell composition: 21.4% of 2-EHA, 15.3% of BMA, 25.0% of STY, 28.8% of MMA, 3.5% of MAA, 3.0% of DAAA, and 3.0% of WAM. Tg(shell, calculated)≈39°C.

## Claims

1. An aqueous dispersion of multi-layered polymer particles, which particles comprise

   (a) a core obtained by emulsion polymerization of ethylene and a vinyl monomer selected from the group consisting of

   (1) vinyl chloride, and

   (2) a vinyl ester of a $C_{1-13}$ alkanoic acid, a free-radically polymerizable monomer containing at least two double bonds, and optionally vinyl chloride, and

   (b) a shell obtained by copolymerization in a subsequent step of

   (1) 30 to 90 wt.% of a (cyclo)alkyl ester of (meth)acrylic acid containing 4 to 12 carbon atoms in the alkyl group,

   (2) 10 to 70 wt.% of a monoethylenically unsaturated monomer selected from the group consisting of an alkyl ester of (meth)acrylic acid containing 1 to 3 carbon atoms in the alkyl group, styrene, ($\alpha$)methylstyrene and mixtures thereof, and

   (3) 0 to 20 wt.% of a different copolymerizable, monoethylenically unsaturated monomer.

2. The aqueous dispersion of claim 1 wherein the weight ratio of the core:shell copolymers is between 20:80 and 90:10, preferably between 40:60 and 80:20.

3. The aqueous dispersion of claim 1 or 2 wherein based on core weight, said core is obtained by emulsion polymerization of

(1) 2 to 30 wt.% of ethylene,

(2) 0 to 10 wt.% of free-radically polymerizable monomer containing at least two double bonds,

(3) 0 to 80 wt.% of monomer(s) of vinyl ester of a $C_1$ to $C_{13}$ alkanoic acid, and

(4) 0 to 95 wt.% of vinyl chloride monomer.

4. A process for the production of an aqueous dispersion of a multi-layer polymer having a core-shell form, which process comprises

(a) emulsion polymerizing, to form a core, a core monomer mixture comprising ethylene and a vinyl monomer selected from the group consisting of

(1) vinyl chloride, and

(2) a vinyl ester of a $C_{1-13}$ alkanoic acid, a free-radically polymerizable monomer containing at least two double bonds, and optionally vinyl chloride,

(b) followed by copolymerization in a subsequent step, to form a shell, a shell monomer mixture comprising

(1) 30 to 90 wt.% of a (cyclo)alkyl ester of (meth)acrylic acid containing 4 to 12 carbon atoms in the alkyl group,

(2) 10 to 70 wt.% of a monoethylenically unsaturated monomer selected from the group consisting of an alkyl ester of (meth)acrylic acid containing 1 to 3 carbon atoms in the alkyl group, styrene, ($\alpha$)methylstyrene and mixtures thereof, and

(3) 0 to 20 wt.% of a different copolymerizable, monoethylenically unsaturated monomer.

5. The process of claim 4 wherein the emulsion polymerizing of step (a) is carried out in the presence of 0.01 to 10 wt.%, based on the weight of the final multi-layer polymer, of a vinyl and/or acrylic seed latex, said latex having a particle size of about 10 to 100 nm.

6. An aqueous dispersion produced by the process according to claim 4 or 5.

7. A coating composition based on an aqueous dispersion of any one of the preceeding claims 1 to 3 and/or 6.

**Patentansprüche**

1. Wässrige Dispersion aus mehrschichtigen Polymerpartikeln, welche Partikel enthalten:

(a) einen Kern, erhalten durch Emulsionspolymerisation von Ethylen und einem Vinylmonomeren, das gewählt ist aus der Gruppe von

(1) Vinylchlorid und
(2) einem Vinylester einer $C_{1-13}$-Alkansäure, einem freiradikalisch polymerisationsfähigen Monomer, enthaltend mindestens zwei Doppelbindungen und gewünschtenfalls Vinylchlorid und

(b) eine Schale, erhalten durch Copolymerisation in aufeinanderfolgenden Schritten von

(1) 30 bis 90 Gew.% eines (Cyclo)alkylesters von (Meth)acrylsäure, enthaltend 4 bis 12 Kohlenstoffatome in der Alkylgruppe,
(2) 10 bis 70 Gew.% eines monoethylenisch ungesättigten Monomeren, gewählt aus der Gruppe bestehend aus einem Alkylester von (Meth)acrylsäure, enthaltend 1 bis 3 Kohlenstoffatome in der Alkylgruppe, Styrol, (a)Methylstyrol und Mischungen hiervon, sowie

(3) 0 bis 20 Gew.% eines unterschiedlichen copolymerisierbaren, monoethylenisch ungesättigten Monomeren.

2. Wässrige Dispersion nach Anspruch 1, bei der das Gewichtsverhältnis der Kern:Schale-Copolymeren zwischen 20:80 und 90:10, vorzugsweise zwischen 40:60 und 80:20, liegt.

3. Wässrige Dispersion nach Anspruch 1 oder 2, bei der, bezogen auf das Kerngewicht, der Kern erhalten ist durch Emulsionspolymerisation von

(1) 2 bis 30 Gew.% Ethylen,
(2) 0 bis 10 Gew.% freiradikalisch polymerisierbaren Monomer, enthaltend mindestens zwei Doppelbindungen,
(3) 0 bis 80 Gew.% Mmonomer(en) von Vinylester einer $C_1$- bis $C_{13}$-Alkansäure und
(4) 0 bis 95 Gew.% Vinylchloridmonomer.

4. Verfahren zur Herstellung einer wässrigen Dispersion eines mehrschichtigen Polymeren mit Kern-Schale-Form, welches Verfahren umfasst:

(a) Emulsionspolymerisation zur Bildung eines Kerns einer Kern-Monomer-Mischung, enthaltend Ethylen und ein Vinylmonomer, gewählt aus der Gruppe bestehend aus

(1) Vinylchlorid und
(2) einem Vinylester einer $C_{1-13}$-Alkansäure, einem freiradikalisch polymerisierbaren Monomer, enthaltend mindestens zwei Doppelbindungen, und gewünschtenfalls Vinylchlorid,

(b) gefolgt von einem zur Bildung einer Schale nachfolgenden Copolymerisationsschritt einer Schalen-Monomer-Mischung, enthaltend

(1) 30 bis 90 Gew.% eines (Cyclo)alkylesters von (Meth)acrylsäure, enthaltend 4 bis 12 Kohlenstoffatome in der Alkylgruppe,
(2) 10 bis 70 Gew.% eines monoethylenisch ungesättigten Monomers, gewählt aus der Gruppe bestehend aus Alkylester von (Meth)acrylsäure, enthaltend 1 bis 3 Kohlenstoffatome in der Alkylgruppe, Styrol, (a) Methylstyrol und Mischungen hiervon, sowie
(3) 0 bis 20 Gew.% eines unterschiedlichen copolymerisierbaren, monoethylenisch ungesättigten Monomeren.

5. Verfahren nach Anspruch 4, bei dem die Emulsionspolymerisation von Schritt (a) in Gegenwart von 0.01 bis 10 Gew.%, bezogen auf das Gewicht des fertigen mehrschichtigen Polymers, eines Vinyl- und/oder Acryl-Keimlatex durchgeführt wird, wobei der Latex eine Partikelgrösse von etwa 10 bis 100 nm hat.

6. Wässrige Dispersion, hergestellt durch das Verfahren nach Anspruch 4 oder 5.

7. Beschichtungsmittel auf Basis einer wässrigen Dispersion gemäss einem der vorangehenden Ansprüche 1 bis 3 und/oder 6.

**Revendications**

1. Une dispersion aqueuse de particules de polymère multicouches, lesdites particules comprenant :

(a) un noyau obtenu par polymérisation en émulsion de l'éthylène et d'un monomère vinylique choisi dans le groupe consistant en :

(1) chlorure de vinyle, et
(2) un ester vinylique d'un acide alcanoïque en $C_1$-$C_{13}$, un monomère polymérisable par voie radicalaire contenant au moins deux doubles liaisons et, le cas échéant, du chlorure de vinyle ; et

(b) une enveloppe obtenue par copolymérisation par étapes ultérieure de:

(1) 30 à 90 % en poids d'un ester de cycloalkyle d'acide (méth)acrylique contenant 4 à 12 atomes de carbone dans le groupe alkyle,
(2) 10 à 70 % en poids d'un monomère à insaturation monoéthylénique choisi dans le groupe consistant en ester d'alkyle de l'acide (méth)acrylique contenant 1 à 3 atomes de carbone dans le groupe alkyle, du styrène, de l'$(\alpha)$méthylstyrène, et leurs mélanges, et
(3) 0 à 20 % en poids d'un autre monomère à insaturation monoéthylénique copolymérisable.

2. La dispersion aqueuse selon la revendication 1, dans laquelle le rapport pondéral des copolymères noyau/enveloppe est compris entre 20/80 et 90/20, de préférence entre 40/60 et 80/20.

3. Une dispersion aqueuse selon la revendication 1 ou 2, dans laquelle, exprimés par rapport au poids du noyau, ledit noyau est obtenu par polymérisation en émulsion de:

(1) 2 à 30 % en poids d'éthylène;
(2) 0 à 10 % en poids d'un monomère polymérisable par voie radicalaire contenant au moins deux doubles liaisons;
(3) 0 à 80 % en poids de un ou plusieurs monomères d'ester vinylique d'un acide alcanoïque en $C_1$-$C_{13}$; et
(4) 0 à 95 % en poids de chlorure de vinyle monomère.

4. Un procédé de préparation d'une dispersion aqueuse d'un polymère multicouches ayant une forme noyau/enveloppe, ledit procédé comprenant:

(a) la polymérisation en émulsion, pour former le noyau, d'un mélange de monomères de noyau comprenant de l'éthylène et un monomère vinylique choisis dans le groupe consistant en:

(1) du chlorure de vinyle, et
(2) un ester vinylique d'un acide alcanoïque en $C_1$-$C_{13}$, un monomère polymérisable par voie radicalaire contenant au moins deux doubles liaisons et, le cas échéant, du chlorure de vinyle; et

(b) suivie par une copolymérisation dans une étape suivante, pour former une enveloppe, d'un mélange de monomères d'enveloppe, comprenant:

(1) 30 à 90 % en poids d'un ester de (cyclo)alkyle de l'acide (méth)acrylique dont le groupe alkyle comporte de 4 à 12 atomes de carbone,
(2) 10 à 70 % en poids d'un monomère à insaturation monoéthylénique choisi dans le groupe consistant en un ester alkyle de l'acide (méth)acrylique dont le groupe alkyle contient 1 à 3 atomes de carbone, du styrène, de l'$(\alpha)$méthylstyrène, et leurs mélanges, et
(3) 0 à 20 % en poids d'un autre monomère à insaturation monoéthylénique copolymérisable.

5. Le procédé selon la revendication 4, dans lequel la polymérisation en émulsion de l'étape (a) est effectuée en présence de 0,01 à 10 % en poids, par rapport au poids du polymère multicouches final, d'un latex d'ensemencement vinylique et/ou acrylique, ledit latex ayant une dimension particulaire d'environ 10 à 100 nm.

6. Une dispersion aqueuse obtenue par un procédé selon la revendication 4 ou 5.

7. Une composition de revêtement à base d'une dispersion aqueuse selon l'une quelconque des revendications précédentes 1 à 3 et/ou 6.